# EUROPÄISCHE PATENTSCHRIFT

(11) **EP 3 391 707 B1**
(45) Veröffentlichungstag und Bekanntmachung des Hinweises auf die Patenterteilung: **14.10.2020**
(21) Anmeldenummer: 16805900.4
(22) Anmeldetag: 24.11.2016
(51) Int. Cl.: H05B 6/06

(54) **KOCHFELDVORRICHTUNG**
HOB DEVICE
SYSTÈME DE TABLE DE CUISSON

(30) Priorität: 18.12.2015 ES 201531851
(43) Veröffentlichungstag der Anmeldung: 24.10.2018
(73) Patentinhaber: BSH Hausgeräte GmbH, 81739 München (DE)
(72) Erfinder: BLASCO RUEDA, Nicolas, 50007 Zaragoza (ES); LLORENTE GIL, Sergio, 50009 Zaragoza (ES); PALACIOS TOMAS, Daniel, 50008 Zaragoza (ES); VALEAU MARTIN, David, 50010 Zaragoza (ES)
(86) Internationale Anmeldenummer: PCT/IB2016/057101
(87) Internationale Veröffentlichungsnummer: WO 2017/103713

(56) Entgegenhaltungen:
- EP-A1- 2 416 621
- EP-A1- 2 779 787
- WO-A1-01/19141
- WO-A1-2007/042316
- WO-A2-2012/092683

## Beschreibung

Die Erfindung betrifft eine Kochfeldvorrichtung nach dem Oberbegriff des Patentanspruchs 1.

Aus dem Stand der Technik ist bereits eine Kochfeldvorrichtung mit einer Empfangseinheit zu einem Empfang einer Information bekannt. In einem Betriebszustand steuert eine Steuereinheit eine Leistungsversorgungseinheit an, welche in Abhängigkeit von der Ansteuerung durch die Steuereinheit Heizeinheiten, oberhalb welcher ein Gargeschirr angeordnet ist, Energie zuführt. Die Steuereinheit greift in dem Betriebszustand auf die Empfangseinheit zu, welche durch ein aus der Beheizung des Gargeschirrs resultierendes elektromagnetisches Wechselfeld beeinflusst und gestört wird.

Die Dokumenten WO 01/19141 A1, WO 2012/092683 A2 und WO 2007/042316 A1 offenbaren Kochfeldvorrichtungen nach dem Stand der Technik mit einer Empfangseinheit, welche zu einem Empfang von Information vorgesehen ist, und mit einer Steuereinheit, welche dazu vorgesehen ist, eine Leistungsversorgungseinheit anzusteuern und auf die Empfangseinheit zuzugreifen, wobei die Steuereinheit dazu vorgesehen ist, die Leistungsversorgungseinheit für ein Inaktivitäts-Zeitintervall zu deaktivieren und in dem Inaktivitäts-Zeitintervall auf die Empfangseinheit zuzugreifen.

Die Aufgabe der Erfindung besteht insbesondere darin, eine gattungsgemäße Vorrichtung mit vorteilhaften Betriebseigenschaften bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere von einer Induktionskochfeldvorrichtung, mit einer Empfangseinheit, welche zu einem Empfang zumindest einer Information vorgesehen ist, und mit einer Steuereinheit, welche dazu vorgesehen ist, in wenigstens einem Betriebszustand zumindest eine Leistungsversorgungseinheit anzusteuern und auf die Empfangseinheit zuzugreifen.

Es wird vorgeschlagen, dass die Steuereinheit dazu vorgesehen ist, in dem Betriebszustand die Leistungsversorgungseinheit für ein Inaktivitäts-Zeitintervall zu deaktivieren und in dem Inaktivitäts-Zeitintervall auf die Empfangseinheit zuzugreifen. Unter einer "Kochfeldvorrichtung" soll insbesondere zumindest ein Teil, insbesondere eine Unterbaugruppe, eines Kochfelds, insbesondere eines Induktionskochfelds, verstanden werden, wobei insbesondere zusätzlich auch Zubehöreinheiten für das Kochfeld umfasst sein können, wie beispielsweise eine Sensoreinheit zur externen Messung einer Temperatur eines Gargeschirrs und/oder eines Garguts. Insbesondere kann die Kochfeldvorrichtung auch das gesamte Kochfeld, insbesondere das gesamte Induktionskochfeld, umfassen. Unter einer "Empfangseinheit" soll insbesondere eine vorzugsweise elektrische und/oder elektronische Einheit verstanden werden, welche dazu vorgesehen ist, die Information aktiv, wie beispielsweise durch eine Anforderung und/oder durch eine Detektion und/oder durch eine von der Empfangseinheit ausgeführte Analyse und/oder durch eine von der Empfangseinheit ausgeführte Berechnung, und/oder passiv, wie beispielsweise durch ein die Empfangseinheit erreichendes elektrisches Signal und/oder eine Eingabe, insbesondere eine Bedieneingabe, zu erhalten. Beispielsweise könnte die Empfangseinheit zumindest ein elektrisches Bauteil aufweisen, wie beispielsweise ein Widerstandsbauteil und/oder eine Spule und/oder eine Induktivität und/oder eine Kapazität und/oder eine Diode. Die Empfangseinheit könnte alternativ oder zusätzlich eine Detektionseinheit und/oder eine Messeinheit aufweisen. Die Detektionseinheit und/oder die Messeinheit könnten/könnte insbesondere zumindest einen Sensor aufweisen, wie beispielsweise einen kapazitiven Sensor und/oder einen induktiven Sensor und/oder ein Topferkennungssystem und/oder einen NTC-Widerstand und/oder einen PTC-Widerstand und/oder einen Beschleunigungssensor und/oder einen Gewichtssensor und/oder einen akustischen Sensor und/oder ein Mikrophon und/oder einen optischen Sensor und/oder einen Erschütterungssensor und/oder einen Dehnungsmess-Sensor. Alternativ oder zusätzlich könnte die Empfangseinheit insbesondere eine Kommunikationseinheit aufweisen, welche insbesondere zu einer Kommunikation mit einer weiteren Einheit, wie beispielsweise mit der Steuereinheit, vorgesehen sein könnte. Die Empfangseinheit könnte insbesondere eine Bedienerschnittstelle und/oder eine Kochfeldelektronik aufweisen. Die Bedienerschnittstelle könnte insbesondere zumindest zu einer Eingabe und/oder Auswahl von Betriebsparametern vorgesehen sein. Insbesondere ist die Elektronikeinheit von einem Schaltelement verschieden. Unter einer "Information" soll insbesondere eine physikalische und/oder chemische Eigenschaft und/oder Kenngröße verstanden werden. Die Information ist insbesondere von einer Schaltinformation verschieden. Beispielsweise könnte die Information insbesondere eine Temperatur und/oder ein Magnetfeld und/oder ein elektrisches Feld sein. Das elektrische Feld könnte beispielsweise ein elektrisches Feld eines Bedienelements, insbesondere eines Touch-Bedienelements, sein. Insbesondere könnte die Information ein elektrisches und/oder elektronisches und/oder elektromagnetisches Signal sein, welches insbesondere zumindest eine Kenngröße charakterisiert und/oder definiert. Alternativ oder zusätzlich könnte die Information ein Signal sein, welches insbesondere zu einer Kommunikation zwischen verschiedenen elektronischen Einheiten vorgesehen ist. Die Information könnte beispielsweise eine elektrische Spannung und/oder ein elektrischer Strom sein. Alternativ oder zusätzlich könnte die Information insbesondere ein Binärcode und/oder ein Datenstrom und/oder eine Datei sein. Die Information könnte alternativ oder zusätzlich ein elektromagnetisches Feld und/oder eine elektromagnetische Strahlung sein. Die elektromagnetische Strahlung könnte beispielsweise Infrarot-Strahlung und/oder ein Funksignal sein. Insbesondere könnte die Information ein optisches und/oder akustisches Signal sein. Unter einer "Steuereinheit" soll insbesondere eine elektronische Einheit verstanden werden, die vorzugsweise in einer Steuer- und/oder Regeleinheit eines Kochfelds zumindest teilweise integriert ist und die vorzugsweise dazu vorgesehen ist, zumindest die Leistungsversorgungseinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Insbesondere weist die Kochfeldvorrichtung zumindest die Leistungsversorgungseinheit auf. Unter einer "Leistungsversorgungseinheit" soll insbesondere eine Einheit verstanden werden, welche dazu vorgesehen ist, in dem Betriebszustand Energie, insbesondere elektrische Energie, zu einer Versorgung zumindest einer Heizeinheit bereitzustellen. Die Leistungsversorgungseinheit ist insbesondere dazu vorgesehen, in dem Betriebszustand zumindest einen insbesondere hochfrequenten Versorgungsstrom bereitzustellen, welcher insbesondere zu einer Versorgung zumindest einer Heizeinheit und/oder zu einer Beheizung zumindest einer Heizeinheit vorgesehen ist. Der Versorgungsstrom ist insbesondere ein hochfrequenter Wechselstrom. Insbesondere weist die Leistungsversorgungseinheit zumindest einen Wechselrichter auf, welcher zu der Bereitstellung von Energie und/oder zu der Bereitstellung des insbesondere hochfrequenten Versorgungsstroms und/oder zu der Versorgung der Heizeinheit vorgesehen ist. Insbesondere ist die Steuereinheit dazu vorgesehen, in dem Betriebszustand zumindest ein Signal, insbesondere zumindest ein Befehlssignal, an die Leistungsversorgungseinheit zu übertragen und insbesondere mittels des Signals zumindest eine Aktion der Leistungsversorgungseinheit zu steuern und/oder zu regeln. Insbesondere ist die Steuereinheit dazu vorgesehen, in dem Betriebszustand mittels des Signals die Leistungsversorgungseinheit zu einer Bereitstellung des insbesondere hochfrequenten Versorgungsstroms anzuregen. Die Steuereinheit ist insbesondere dazu vorgesehen, in dem Betriebszustand insbesondere mittels des Signals zumindest eine Schaltfrequenz der Leistungsversorgungseinheit, insbesondere des Wechselrichters der Leistungsversorgungseinheit, zu steuern und/oder zu regeln. Insbesondere weist die Kochfeldvorrichtung zumindest eine Heizeinheit, insbesondere zumindest zwei, vorteilhaft zumindest vier, besonders vorteilhaft zumindest acht und vorzugsweise eine Vielzahl an Heizeinheiten auf. Beispielsweise könnte die Steuereinheit dazu vorgesehen sein, in dem Betriebszustand die Empfangseinheit zu steuern und/oder zu regeln. Die Steuereinheit könnte insbesondere dazu vorgesehen sein, in dem Betriebszustand zumindest eine Aktion der Empfangseinheit insbesondere aktiv und vorteilhaft mittels zumindest eines an die Empfangseinheit übertragenen Signals zu veranlassen. Alternativ oder zusätzlich könnte die Steuereinheit insbesondere dazu vorgesehen sein, in dem Betriebszustand die Empfangseinheit und/oder zumindest eine die von der Empfangseinheit empfangene Information charakterisierende Kenngröße auszulesen, wobei die Empfangseinheit beispielsweise ein Widerstandsbauteil zu einer Detektion einer Spannung sein könnte. In dem Inaktivitäts-Zeitintervall nimmt eine Schaltfrequenz der Leistungsversorgungseinheit, insbesondere des Wechselrichters der Leistungsversorgungseinheit, insbesondere einen Wert von wenigstens im Wesentlichen Null an. Insbesondere beträgt eine von der Leistungsversorgungseinheit bereitgestellte Energie in dem Inaktivitäts-Zeitintervall wenigstens im Wesentlichen Null. Ein Stromfluss durch die Heizeinheit, welche insbesondere zu einer Versorgung durch die Leistungsversorgungseinheit vorgesehen ist, beträgt in dem Inaktivitäts-Zeitintervall insbesondere wenigstens im Wesentlichen Null. Insbesondere beträgt ein von der Leistungsversorgungseinheit bereitgestellter insbesondere hochfrequenter Versorgungsstrom in dem Inaktivitäts-Zeitintervall wenigstens im Wesentlichen Null. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung können insbesondere vorteilhafte Betriebseigenschaften erreicht werden. In dem Inaktivitäts-Zeitintervall kann insbesondere eine hohe Messgenauigkeit der Empfangseinheit, welche insbesondere eine hohe Anfälligkeit für elektromagnetische Störungen aufweist, und/oder eine störungsarme Bereitstellung einer die Information charakterisierenden und/oder kennzeichnenden Kenngröße erzielt werden. Insbesondere können elektromagnetische Interferenzen, welche insbesondere durch ein von der Leistungsversorgungseinheit bereitgestelltes elektromagnetisches Wechselfeld verursacht sein könnten, und/oder Flicker wirkungsvoll vermieden werden. Durch das Zugreifen auf die Empfangseinheit in dem Inaktivitäts-Zeitintervall kann insbesondere auf einfache und/oder billigere Bauteile für die Elektronikeinheit zurückgegriffen werden, wodurch insbesondere geringe Kosten ermöglicht werden können.

In einer bevorzugten Ausgestaltung wird vorgeschlagen, dass die Empfangseinheit eine Detektionseinheit aufweist und dazu vorgesehen ist, in dem Betriebszustand während des Inaktivitäts-Zeitintervalls mittels der Detektionseinheit zumindest eine Kenngröße zu detektieren. Beispielsweise könnte die Detektionseinheit zumindest ein elektrisches Bauteil sein, welches zu einem Empfang eines die Kenngröße charakterisierenden und/oder definierenden elektrischen Signals vorgesehen sein könnte. Alternativ oder zusätzlich könnte die Detektionseinheit zumindest einen Sensor aufweisen, welcher zu der Detektion der Kenngröße vorgesehen sein könnte. Unter einem "Sensor" soll insbesondere zumindest ein Element verstanden werden, das zumindest einen Detektor zu einer Detektion wenigstens einer Sensorkenngröße aufweist und das dazu vorgesehen ist, einen die Sensorkenngröße kennzeichnenden Wert auszugeben, wobei es sich bei der Sensorkenngröße vorteilhaft um eine physikalische und/oder chemische Größe handelt. Dadurch kann insbesondere eine störungsarme und/oder präzise Detektion der Kenngröße erzielt werden.

In einer besonders bevorzugten Ausgestaltung wird vorgeschlagen, dass die Empfangseinheit dazu vorgesehen ist, in dem Betriebszustand während des Inaktivitäts-Zeitintervalls mittels der Detektionseinheit zumindest eine Temperaturkenngröße eines aufgestellten und insbesondere beheizten Gargeschirrs zu detektieren. Die Kenngröße ist insbesondere eine Temperarturkenngröße. Unter einer "Temperaturkenngröße" soll insbesondere eine Kenngröße verstanden werden, welche eine Temperatur definiert und/oder ein Maß für einen Wert einer Temperatur darstellt. Die Temperaturkenngröße könnte beispielsweise eine Temperatur sein. Alternativ oder zusätzlich könnte die Temperaturkenngröße insbesondere ein elektromagnetisches Signal, wie beispielsweise ein elektromagnetisches Feld und/oder eine elektromagnetische Strahlung, sein. Die Temperaturkenngröße könnte alternativ oder zusätzlich insbesondere eine elektrische Kenngröße, wie insbesondere eine elektrische Spannung und/oder ein elektrischer Strom, sein. Dadurch können insbesondere optimale Garergebnisse und/oder eine Durchführung eines automatischen Garprozesses ermöglicht werden.

Weiterhin wird vorgeschlagen, dass die Empfangseinheit dazu vorgesehen ist, in dem Betriebszustand während des Inaktivitäts-Zeitintervalls mittels der Detektionseinheit aufgestelltes Gargeschirr zu detektieren. Die Kenngröße ist insbesondere ein eine Anwesenheit eines Gargeschirrs charakterisierendes Signal und/oder ein eine Abwesenheit eines Gargeschirrs charakterisierendes Signal. Dadurch kann insbesondere eine fehlerhafte Detektion eines Gargeschirrs vermieden und/oder das Gargeschirr, insbesondere eine Position und/oder eine Größe und/oder ein Material des Gargeschirrs, exakt detektiert werden.

Die Empfangseinheit könnte beispielsweise eine Bedienerschnittstelle aufweisen und zu einem Empfang zumindest einer Information, welche insbesondere ein Bediensignal sein könnte, vorgesehen sein. Vorzugsweise weist die Empfangseinheit eine Kommunikationseinheit auf und ist dazu vorgesehen, in dem Betriebszustand während des Inaktivitäts-Zeitintervalls mittels der Kommunikationseinheit an zumindest einer Kommunikation teilzunehmen. Insbesondere ist die Empfangseinheit dazu vorgesehen, in dem Betriebszustand während des Inaktivitäts-Zeitintervalls mittels der Kommunikationseinheit zumindest eine Kenngröße, insbesondere die Kenngröße, und/oder zumindest einen Parameter zu senden und/oder zu empfangen. Die Kommunikationseinheit könnte beispielsweise zu einer drahtgebundenen Kommunikation vorgesehen sein. Alternativ oder zusätzlich könnte die Kommunikationseinheit insbesondere zu einer drahtlosen Kommunikation vorgesehen sein. Dadurch kann insbesondere eine fehlerlose Kommunikation gewährleistet werden. Insbesondere können Kenngröße und/oder Parameter fehlerlos übertragen werden.

Zudem wird vorgeschlagen, dass das Inaktivitäts-Zeitintervall maximal 7 ms, insbesondere maximal 5 ms, vorteilhaft maximal 3 ms, besonders vorteilhaft maximal 1 ms und vorzugsweise maximal 0,1 ms beträgt. Dadurch kann insbesondere ein kurzes Inaktivitäts-Zeitintervall erzielt und damit verbunden eine große Menge an Energie einer Heizeinheit zu einer Beheizung eines aufgestellten Gargeschirrs zur Verfügung gestellt werden.

Weiterhin wird vorgeschlagen, dass die Steuereinheit dazu vorgesehen ist, in dem Betriebszustand in einem ersten Zeitintervall, auf welches das Inaktivitäts-Zeitintervall zeitlich unmittelbar folgt, die Leistungsversorgungseinheit mit einer sich ständig in ihrem Wert verändernden Schaltfrequenz zu betreiben. Insbesondere ist die Steuereinheit dazu vorgesehen, in dem Betriebszustand eine Frequenz des von der Leistungsversorgungseinheit bereitgestellten insbesondere hochfrequenten Versorgungsstroms stetig in seinem Wert zu verändern. Die Steuereinheit ist insbesondere dazu vorgesehen, in dem Betriebszustand zumindest einen Wechselrichter der Leitungsversorgungseinheit, insbesondere zumindest ein Schaltelement zumindest eines Wechselrichters der Leitungsversorgungseinheit, anzusteuern und insbesondere die Schaltfrequenz ständig in ihrem Wert zu verändern. Insbesondere ist die Steuereinheit dazu vorgesehen, in dem Betriebszustand durch die ständige Veränderung des Werts der Schaltfrequenz eine Hüllkurve eines durch zumindest eine Heizeinheit fließenden elektrischen Versorgungsstroms zu verändern. Dadurch kann insbesondere eine hohe Effizienz und/oder eine flexible Beeinflussung eines durch zumindest eine Heizeinheit fließenden elektrischen Versorgungsstroms erreicht werden. Insbesondere kann eine Hüllkurve eines durch zumindest eine Heizeinheit fließenden elektrischen Versorgungsstroms schnell auf Null reduziert werden, wodurch insbesondere eine durch eine unstetige Änderung des elektrischen Versorgungsstroms resultierende Geräuschentwicklung vermieden werden kann. Ein Auftreten von Flicker kann insbesondere vermieden und/oder eine Häufigkeit eines Auftretens von Flicker reduziert werden. Insbesondere können geringe Verluste in der Leistungsversorgungseinheit und/oder eine energiesparende Ausgestaltung erreicht werden.

Ferner wird vorgeschlagen, dass die Steuereinheit dazu vorgesehen ist, in dem Betriebszustand in einem zweiten Zeitintervall, welches zeitlich unmittelbar auf das Inaktivitäts-Zeitintervall folgt, die Leistungsversorgungseinheit mit einer sich ständig in ihrem Wert verändernden Schaltfrequenz zu betreiben. Dadurch kann insbesondere eine hohe Effizienz und/oder eine flexible Beeinflussung eines durch zumindest eine Heizeinheit fließenden elektrischen Versorgungsstroms erreicht werden. Insbesondere kann eine Hüllkurve eines durch zumindest eine Heizeinheit fließenden elektrischen Versorgungsstroms schnell von Null ausgehend erhöht werden, wodurch insbesondere eine durch eine unstetige Änderung des elektrischen Versorgungsstroms resultierende Geräuschentwicklung vermieden werden kann. Ein Auftreten von Flicker kann insbesondere vermieden und/oder eine Häufigkeit eines Auftretens von Flicker reduziert werden. Insbesondere können geringe Verluste in der Leistungsversorgungseinheit und/oder eine energiesparende Ausgestaltung erreicht werden.

Zudem wird vorgeschlagen, dass die Steuereinheit dazu vorgesehen ist, in dem Betriebszustand das Inaktivitäts-Zeitintervall wenigstens im Wesentlichen symmetrisch um einen Nulldurchgang einer Versorgungsspannung, insbesondere einer Netzspannung, anzuordnen. Die Versorgungsspannung ist insbesondere eine Wechselspannung. Beispielsweise könnte die Versorgungsspannung eine Frequenz mit einem Wert von im Wesentlichen 50 Hz aufweisen. Insbesondere könnte eine Periodendauer der Versorgungsspannung einen Wert von wenigstens im Wesentlichen 20 ms aufweisen. Alternativ könnte die Versorgungsspannung insbesondere eine Frequenz mit einem Wert von im Wesentlichen 60 Hz aufweisen, wobei eine Periodendauer der Versorgungsspannung insbesondere einen Wert von wenigstens im Wesentlichen 16,7 ms aufweisen könnte. Insbesondere beträgt eine Abweichung eines Mittelpunkts des Inaktivitäts-Zeitintervalls von dem Nulldurchgang der Versorgungsspannung maximal 1 ms, insbesondere maximal 0,7 ms, voreilhaft maximal 0,3 ms und besonders vorteilhaft maximal 0,1 ms. Insbesondere beträgt eine Abweichung eines Mittelpunkts des Inaktivitäts-Zeitintervalls von dem Nulldurchgang der Versorgungsspannung maximal 15 %, insbesondere maximal 10 %, voreilhaft maximal 5 %, besonders vorteilhaft maximal 3 % und vorzugsweise maximal 1 % einer Gesamtdauer des Inaktivitäts-Zeitintervalls. Dadurch kann insbesondere eine energiesparende und/oder effiziente Ausgestaltung erreicht werden.

Weiterhin wird vorgeschlagen, dass die Steuereinheit dazu vorgesehen ist, in dem Betriebszustand das Inaktivitäts-Zeitintervall wenigstens im Wesentlichen asymmetrisch um einen Nulldurchgang einer Versorgungsspannung anzuordnen. Insbesondere ist eine Abweichung eines Mittelpunkts des Inaktivitäts-Zeitintervalls von dem Nulldurchgang der Versorgungsspannung größer als 1 ms, insbesondere größer als 0,7 ms, voreilhaft größer als 0,3 ms und besonders vorteilhaft größer als 0,1 ms. Insbesondere ist eine Abweichung eines Mittelpunkts des Inaktivitäts-Zeitintervalls von dem Nulldurchgang der Versorgungsspannung größer als 15 %, insbesondere größer als 10 %, voreilhaft größer als 5 %, besonders vorteilhaft größer als 3 % und vorzugsweise größer als 1 % einer Gesamtdauer des Inaktivitäts-Zeitintervalls. Dadurch kann insbesondere eine hohe Flexibilität erzielt werden.

Besonders vorteilhafte Betriebseigenschaften können erreicht werden durch ein Kochfeld, insbesondere durch ein Induktionskochfeld, mit zumindest einer erfindungsgemäßen Kochfeldvorrichtung, insbesondere mit zumindest einer erfindungsgemäßen Induktionskochfeldvorrichtung.

Die vorteilhaften Betriebseigenschaften können weiter gesteigert werden durch ein Verfahren zum Betrieb einer erfindungsgemäßen Kochfeldvorrichtung, insbesondere einer erfindungsgemäßen Induktionskochfeldvorrichtung, mit einer Empfangseinheit, welche zu einem Empfang zumindest einer Information vorgesehen ist, wobei in wenigstens einem Betriebszustand zumindest eine Leistungsversorgungseinheit angesteuert und auf die Empfangseinheit zugegriffen wird, und wobei in dem Betriebszustand die Leistungsversorgungseinheit für ein Inaktivitäts-Zeitintervall deaktiviert und in dem Inaktivitäts-Zeitintervall auf die Empfangseinheit zugegriffen wird.

Die Kochfeldvorrichtung soll hierbei nicht auf die oben beschriebene Anwendung und Ausführungsform beschränkt sein. Insbesondere kann die Kochfeldvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein Kochfeld mit einer Kochfeldvorrichtung in einer schematischen Draufsicht,
- Fig. 2: eine Relation zwischen verschiedenen Einheiten der Kochfeldvorrichtung in einer schematischen Darstellung,
- Fig. 3: einen zeitlichen Verlauf eines von einer Leistungsversorgungseinheit der Kochfeldvorrichtung bereitgestellten Versorgungsstroms und einen übermäßig vergrößerten Ausschnitt des Versorgungsstroms in einer schematischen nicht maßstabsgetreuen Darstellung,
- Fig. 4: einen zeitlichen Verlauf einer Schaltfrequenz der Leistungsversorgungseinheit und des Versorgungsstroms in einer schematischen nicht maßstabsgetreuen Darstellung,
- Fig. 5: einen zeitlichen Verlauf eines von einer Leistungsversorgungseinheit einer alternativen Kochfeldvorrichtung bereitgestellten Versorgungsstroms und einen übermäßig vergrößerten Ausschnitt des Versorgungsstroms in einer schematischen nicht maßstabsgetreuen Darstellung und
- Fig. 6: einen zeitlichen Verlauf einer Schaltfrequenz der Leistungsversorgungseinheit und des Versorgungsstroms in einer schematischen nicht maßstabsgetreuen Darstellung.

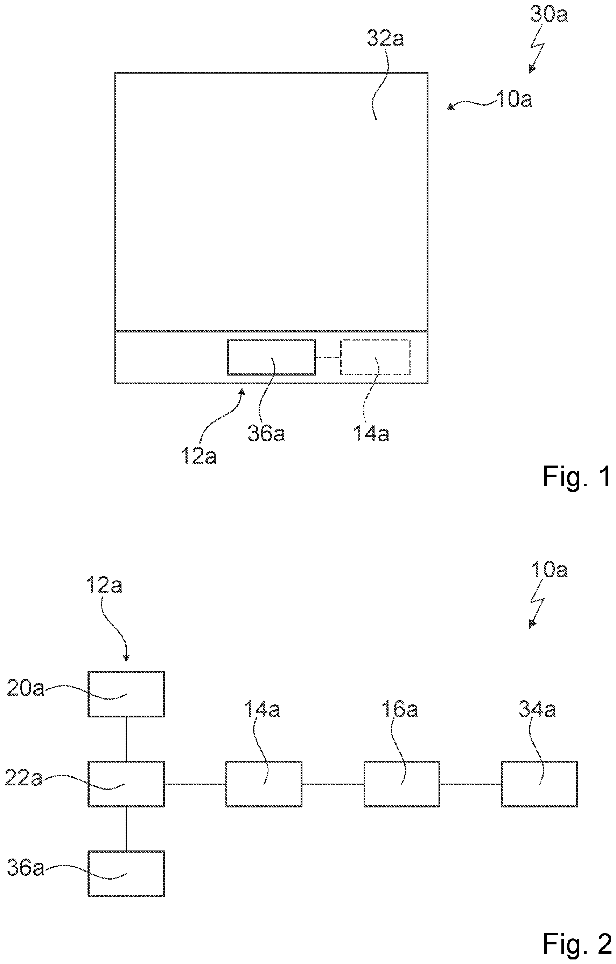

Fig. 1 zeigt ein Kochfeld 30a, das als ein Induktionskochfeld ausgebildet ist, mit einer Kochfeldvorrichtung 10a, die als eine Induktionskochfeldvorrichtung ausgebildet ist. Die Kochfeldvorrichtung 10a weist eine Kochfeldplatte 32a auf. In einem montierten Zustand bildet die Kochfeldplatte 32a einen Teil eines Kochfeldaußengehäuses aus. Die Kochfeldplatte 32a ist zu einem Aufstellen von Gargeschirr vorgesehen.

Die Kochfeldvorrichtung 10a weist mehrere Heizeinheiten 34a auf (vgl. Fig. 2). Beispielsweise könnten die Heizeinheiten in Form einer Matrix angeordnet sein. Die Heizeinheiten könnten insbesondere Teil eines variablen Kochflächenbereichs sein. Alternativ könnten die Heizeinheiten insbesondere Teil eines klassischen Kochfelds sein, bei welchem insbesondere durch eine Position der Heizeinheiten definierte, fest vorgegebene Heizzonen existieren könnten, welche insbesondere auf der Kochfeldplatte markiert sein könnten.

Im Folgenden wird lediglich eine der Heizeinheiten 34a beschrieben. Die Heizeinheit 34a ist dazu vorgesehen, auf der Kochfeldplatte 32a oberhalb der Heizeinheit 34a aufgestelltes Gargeschirr zu erhitzen. Die Heizeinheit 34a ist als eine Induktionsheizeinheit ausgebildet.

Die Kochfeldvorrichtung 10a weist die Empfangseinheit 12a auf. Die Empfangseinheit 12a ist zu einem Empfang einer Information vorgesehen. Die Empfangseinheit 12a ist eine Einheit, welche eine hohe Anfälligkeit für elektromagnetische Störungen aufweist.

Die Empfangseinheit 12a weist eine Bedienerschnittstelle 36a auf (vgl. Fig. 1 und 2). Die Bedienerschnittstelle 36a ist zu einer Eingabe und/oder Auswahl von Betriebsparametern vorgesehen, beispielsweise einer Heizleistung und/oder einer Heizleistungsdichte und/oder einer Heizzone.

Die Kochfeldvorrichtung 10a weist eine Steuereinheit 14a auf (vgl. Fig. 1 und 2). In einem Betriebszustand greift die Steuereinheit 14a auf die Empfangseinheit 12a zu. Die Steuereinheit 14a regelt in dem Betriebszustand eine Energiezufuhr zu der Heizeinheit 34a.

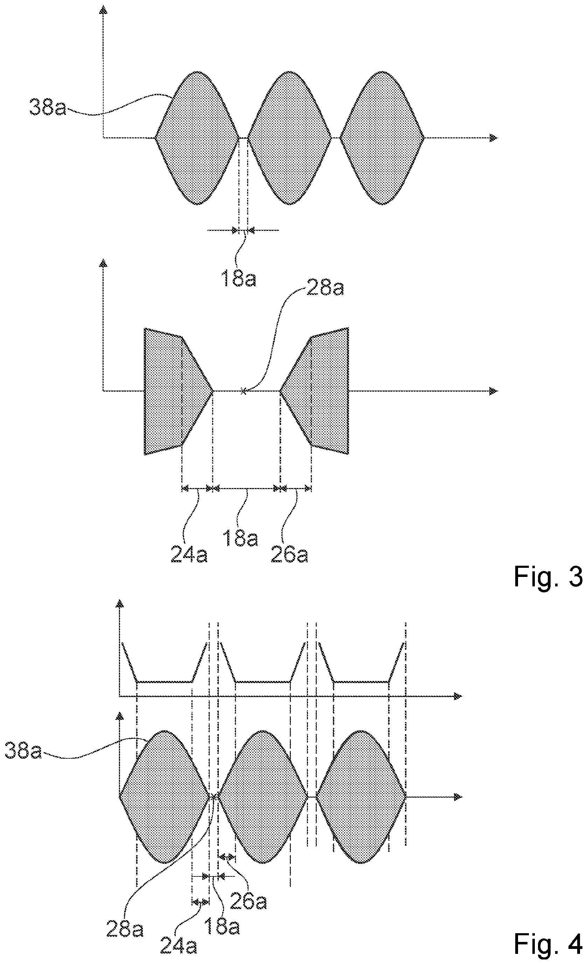

Die Kochfeldvorrichtung 10a weist eine Leistungsversorgungseinheit 16a auf (vgl. Fig. 2). Die Leistungsversorgungseinheit 16a stellt in dem Betriebszustand eine Energie zu einer Versorgung der Heizeinheit 34a bereit. In dem Betriebszustand stellt die Leistungsversorgungseinheit 16a einen Versorgungsstrom 38a zu einer Versorgung der Heizeinheit 34a bereit (vgl. Fig. 3 und 4). Die Leistungsversorgungseinheit 16a ist dazu vorgesehen, von der Steuereinheit 14a angesteuert zu werden.

Die Steuereinheit 14a steuert die Leistungsversorgungseinheit 16a in dem Betriebszustand zu der Regelung der Energiezufuhr zu der Heizeinheit 34a an. Die Leistungsversorgungseinheit 16a stellt in dem Betriebszustand in Abhängigkeit einer Ansteuerung durch die Steuereinheit 14a den Versorgungsstrom 38a zu einer Versorgung der Heizeinheit 34a bereit.

In dem Betriebszustand deaktiviert die Steuereinheit 14a die Leistungsversorgungseinheit 16a für ein Inaktivitäts-Zeitintervall 18a (vgl. Fig. 3 und 4). Eine von der Leistungsversorgungseinheit 16a bereitgestellte Energie zu der Versorgung der Heizeinheit 34a beträgt in dem Inaktivitäts-Zeitintervall 18a im Wesentlichen Null. Die Steuereinheit 14a greift in dem Inaktivitäts-Zeitintervall 18a auf die Empfangseinheit 12a zu. Bei dem Zugreifen auf die Empfangseinheit 12a entnimmt die Steuereinheit 14a der Empfangseinheit 12a eine die von der Empfangseinheit 12a empfangene Information kennzeichnende Kenngröße.

Die Empfangseinheit 12a weist eine Detektionseinheit 20a auf (vgl. Fig. 2). In dem Betriebszustand detektiert die Empfangseinheit 12a während des Inaktivitäts-Zeitintervalls 18a mittels der Detektionseinheit 20a mehrere Kenngrößen. Im Folgenden wird lediglich eine der Kenngrößen beschrieben.

Die Detektionseinheit 20a ist zu einer Detektion eines aufgestellten Gargeschirrs (nicht dargestellt) vorgesehen. Beispielsweise könnte die Detektionseinheit teilweise einstückig mit der Heizeinheit ausgebildet sein. Während des Inaktivitäts-Zeitintervalls 18a detektiert die Empfangseinheit 12a in dem Betriebszustand mittels der Detektionseinheit 20a aufgestelltes Gargeschirr. Die Empfangseinheit 12a detektiert in dem Betriebszustand während des Inaktivitäts-Zeitintervalls 18a mittels der Detektionseinheit 20a, ob oberhalb der Heizeinheit 34a ein Gargeschirr aufgestellt ist.

Die Empfangseinheit 12a weist eine Kommunikationseinheit 22a auf (vgl. Fig. 2). Die Kommunikationseinheit 22a ist zu einer Kommunikation mit einer weiteren Einheit vorgesehen. In dem Betriebszustand kommuniziert die Kommunikationseinheit 22a mit Einheiten der Empfangseinheit 12a, wie beispielsweise mit der Detektionseinheit 20a und/oder mit der Bedienerschnittstelle 36a. Die Kommunikationseinheit 22a kommuniziert in dem Betriebszustand mit von der Empfangseinheit 12a verschiedenen Einheiten, wie beispielsweise mit der Steuereinheit 14a.

Die Empfangseinheit 12a nimmt in dem Betriebszustand während des Inaktivitäts-Zeitintervalls 18a mittels der Kommunikationseinheit 22a an mehreren Kommunikationen teil. Im Folgenden wird lediglich eine der Kommunikationen beschrieben.

In dem Betriebszustand nimmt die Empfangseinheit 12a während des Inaktivitäts-Zeitintervalls 18a mittels der Kommunikationseinheit 22a an einer Kommunikation mit der Steuereinheit 14a teil. Im Fall einer Anwesenheit eines Gargeschirrs oberhalb der Heizeinheit 34a stellt die Empfangseinheit 12a in dem Betriebszustand der Steuereinheit 14a eine eine Anwesenheit eines Gargeschirrs charakterisierende Kenngröße bereit. Im Fall einer Abwesenheit eines Gargeschirrs oberhalb der Heizeinheit 34a stellt die Empfangseinheit 12a in dem Betriebszustand der Steuereinheit 14a eine eine Abwesenheit eines Gargeschirrs charakterisierende Kenngröße bereit.

Die Detektionseinheit 20a weist einen Sensor (nicht dargestellt) auf. Im vorliegenden Ausführungsbeispiel weist die Detektionseinheit 20a einen Temperatursensor auf. Die Empfangseinheit 12a detektiert in dem Betriebszustand während des Inaktivitäts-Zeitintervalls 18a mittels der Detektionseinheit 20a eine Temperaturkenngröße eines aufgestellten Gargeschirrs. Im vorliegenden Ausführungsbeispiel ist die Temperaturkenngröße eine eine Temperatur des aufgestellten Gargeschirrs charakterisierende Kenngröße. Die Empfangseinheit 12a stellt in dem Betriebszustand der Steuereinheit 14a die Temperaturkenngröße bereit.

In Abhängigkeit von einer Bedieneingabe mittels der Bedienerschnittstelle 36a stellt die Empfangseinheit 12a in dem Betriebszustand während des Inaktivitäts-Zeitintervalls 18a der Steuereinheit 14a eine die Bedieneingabe charakterisierende Kenngröße bereit. Die Steuereinheit 14a ist dazu vorgesehen, in Abhängigkeit von mittels der Bedienerschnittstelle 36a eingegebener Betriebsparameter Aktionen auszuführen und/oder Einstellungen zu verändern.

Das Inaktivitäts-Zeitintervall 18a beträgt im vorliegenden Ausführungsbeispiel im Wesentlichen 1 ms. Die Steuereinheit 14a ordnet in dem Betriebszustand das Inaktivitäts-Zeitintervall 18a im Wesentlichen symmetrisch um einen Nulldurchgang 28a einer Versorgungsspannung an (vgl. Fig. 3 und 4). Ein Mittelpunkt des Inaktivitäts-Zeitintervalls 18a entspricht im Wesentlichen dem Nulldurchgang 28a der Versorgungsspannung.

In dem Betriebszustand betreibt die Steuereinheit 14a in einem ersten Zeitintervall 24a, auf welches das Inaktivitäts-Zeitintervall 18a zeitlich unmittelbar folgt, die Leistungsversorgungseinheit 16a mit einer sich ständig in ihrem Wert verändernden Schaltfrequenz (vgl. Fig. 4). Die Steuereinheit 14a reduziert in dem Betriebszustand während des ersten Zeitintervalls 24a eine von der Leistungsversorgungseinheit 16a bereitgestellte Energie monoton auf einen Wert von im Wesentlichen Null.

Ausgehend von dem Wert von im Wesentlichen Null erhöht die Steuereinheit 14a in dem Betriebszustand während eines zweiten Zeitintervalls 26a, welches zeitlich unmittelbar auf das Inaktivitäts-Zeitintervall 18a folgt, eine von der Leistungsversorgungseinheit 16a bereitgestellte Energie monoton. In dem Betriebszustand betreibt die Steuereinheit 14a in dem zweiten Zeitintervall 26a die Leistungsversorgungseinheit 16a mit einer sich ständig in ihrem Wert verändernden Schaltfrequenz (vgl. Fig. 4).

In einem Verfahren zum Betrieb der Kochfeldvorrichtung 10a wird in dem Betriebszustand die Leistungsversorgungseinheit 16a angesteuert. In einem weiteren Verfahrensschritt wird in dem Betriebszustand die Leistungsversorgungseinheit 16a für das Inaktivitäts-Zeitintervall 18a deaktiviert. In dem Betriebszustand wird in einem weiteren Verfahrensschritt in dem Inaktivitäts-Zeitintervall 18a auf die Empfangseinheit 12a zugegriffen.

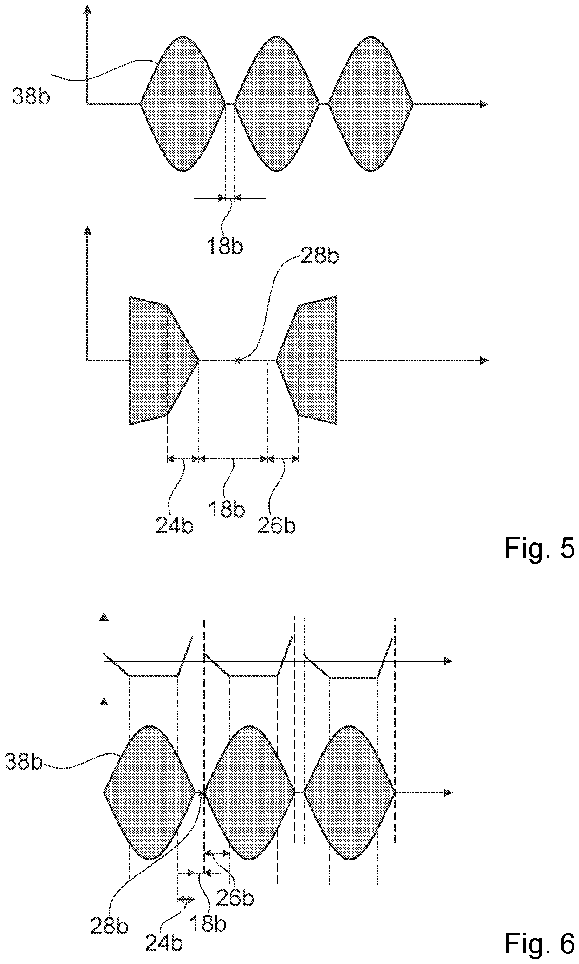

In Fig. 5 und 6 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 4 verwiesen werden kann. Zur Unterscheidung der Ausführungsbeispiele ist der Buchstabe a in den Bezugszeichen des Ausführungsbeispiels in den Fig. 1 bis 4 durch den Buchstaben b in den Bezugszeichen des Ausführungsbeispiels der Fig. 5 und 6 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 4 verwiesen werden.

Eine Steuereinheit 14b einer alternativen Kochfeldvorrichtung 10b steuert in einem Betriebszustand eine Leistungsversorgungseinheit 16b der Kochfeldvorrichtung 10b an. In dem Betriebszustand deaktiviert die Steuereinheit 14b die Leistungsversorgungseinheit 16b für ein Inaktivitäts-Zeitintervall 18b (vgl. Fig. 5 und 6).

Die Steuereinheit 14b ordnet in dem Betriebszustand das Inaktivitäts-Zeitintervall 18b im Wesentlichen asymmetrisch um einen Nulldurchgang 28b einer Versorgungsspannung an (vgl. Fig. 5 und 6). Ein Mittelpunkt des Inaktivitäts-Zeitintervalls 18b und der Nulldurchgang 28a der Versorgungsspannung sind zueinander beabstandet angeordnet. Im vorliegenden Ausführungsbeispiel ist eine Abweichung des Mittelpunkts des Inaktivitäts-Zeitintervalls 18b von dem Nulldurchgang 28b der Versorgungsspannung größer als 0,3 ms. Die Steuereinheit 14b greift in dem Inaktivitäts-Zeitintervall 18b auf die Empfangseinheit 12b zu.

### Bezugszeichen

- 10: Kochfeldvorrichtung
- 12: Empfangseinheit
- 14: Steuereinheit
- 16: Leistungsversorgungseinheit
- 18: Inaktivitäts-Zeitintervall
- 20: Detektionseinheit
- 22: Kommunikationseinheit
- 24: Erstes Zeitintervall
- 26: Zweites Zeitintervall
- 28: Nulldurchgang
- 30: Kochfeld
- 32: Kochfeldplatte
- 34: Heizeinheit
- 36: Bedienerschnittstelle
- 38: Versorgungsstrom

## Patentansprüche

1. Kochfeldvorrichtung (10a-b) mit einer Empfangseinheit (12a-b), welche zu einem Empfang zumindest einer Information vorgesehen ist, und mit einer Steuereinheit (14a-b), welche dazu vorgesehen ist, in wenigstens einem Betriebszustand zumindest eine Leistungsversorgungseinheit (16a-b) anzusteuern und auf die Empfangseinheit (12a-b) zuzugreifen, wobei die Steuereinheit (14a-b) dazu vorgesehen ist, in dem Betriebszustand die Leistungsversorgungseinheit (16a-b) für ein Inaktivitäts-Zeitintervall (18a-b) zu deaktivieren und in dem Inaktivitäts-Zeitintervall (18a-b) auf die Empfangseinheit (12a-b) zuzugreifen, **dadurch gekennzeichnet, dass** das Inaktivitäts-Zeitintervall (18a-b) maximal 7 ms beträgt.

2. Kochfeldvorrichtung nach Anspruch 1, **dadurch gekennzeichnet, dass** die Empfangseinheit (12a-b) eine Detektionseinheit (20a-b) aufweist und dazu vorgesehen ist, in dem Betriebszustand während des Inaktivitäts-Zeitintervalls (18a-b) mittels der Detektionseinheit (20a-b) zumindest eine Kenngröße zu detektieren.

3. Kochfeldvorrichtung nach Anspruch 2, **dadurch gekennzeichnet, dass** die Empfangseinheit (12a-b) dazu vorgesehen ist, in dem Betriebszustand während des Inaktivitäts-Zeitintervalls (18a-b) mittels der Detektionseinheit (20a-b) zumindest eine Temperaturkenngröße eines aufgestellten Gargeschirrs zu detektieren.

4. Kochfeldvorrichtung nach Anspruch 2 oder 3, **dadurch gekennzeichnet, dass** die Empfangseinheit (12a-b) dazu vorgesehen ist, in dem Betriebszustand während des Inaktivitäts-Zeitintervalls (18a-b) mittels der Detektionseinheit (20a-b) aufgestelltes Gargeschirr zu detektieren.

5. Kochfeldvorrichtung nach einem der vorhergehenden Ansprüche, **dadurch gekennzeichnet, dass** die Empfangseinheit (12a-b) eine Kommunikationseinheit (22a-b) aufweist und dazu vorgesehen ist, in dem Betriebszustand während des Inaktivitäts-Zeitintervalls (18a-b) mittels der Kommunikationseinheit (22a-b) an zumindest einer Kommunikation teilzunehmen.

6. Kochfeldvorrichtung nach einem der vorhergehenden Ansprüche, **dadurch gekennzeichnet, dass** die Steuereinheit (14a-b) dazu vorgesehen ist, in dem Betriebszustand in einem ersten Zeitintervall (24a-b), auf welches das Inaktivitäts-Zeitintervall (18a-b) zeitlich unmittelbar folgt, die Leistungsversorgungseinheit (16a-b) mit einer sich ständig in ihrem Wert verändernden Schaltfrequenz zu betreiben.

7. Kochfeldvorrichtung nach einem der vorhergehenden Ansprüche, **dadurch gekennzeichnet, dass** die Steuereinheit (14a-b) dazu vorgesehen ist, in dem Betriebszustand in einem zweiten Zeitintervall (26a-b), welches zeitlich unmittelbar auf das Inaktivitäts-Zeitintervall (18a-b) folgt, die Leistungsversorgungseinheit (16a-b) mit einer sich ständig in ihrem Wert verändernden Schaltfrequenz zu betreiben.

8. Kochfeldvorrichtung nach einem der vorhergehenden Ansprüche, **dadurch gekennzeichnet, dass** die Steuereinheit (14a) dazu vorgesehen ist, in dem Betriebszustand das Inaktivitäts-Zeitintervall (18a) wenigstens im Wesentlichen symmetrisch um einen Nulldurchgang (28a) einer Versorgungsspannung anzuordnen.

9. Kochfeldvorrichtung nach einem der Ansprüche 1 bis 7, **dadurch gekennzeichnet, dass** die Steuereinheit (14b) dazu vorgesehen ist, in dem Betriebszustand das Inaktivitäts-Zeitintervall (18b) wenigstens im Wesentlichen asymmetrisch um einen Nulldurchgang (28b) einer Versorgungsspannung anzuordnen.

10. Kochfeld (30a), insbesondere Induktionskochfeld, mit zumindest einer Kochfeldvorrichtung (10a-b) nach einem der vorhergehenden Ansprüche.

11. Verfahren zum Betrieb einer Kochfeldvorrichtung (10a-b) nach einem der Ansprüche 1 bis 9, mit einer Empfangseinheit (12a-b), welche zu einem Empfang zumindest einer Information vorgesehen ist, wobei in wenigstens einem Betriebszustand zumindest eine Leistungsversorgungseinheit (16a-b) angesteuert und auf die Empfangseinheit (12a-b) zugegriffen wird, wobei in dem Betriebszustand die Leistungsversorgungseinheit (16a-b) für ein Inaktivitäts-Zeitintervall (18a-b) deaktiviert und in dem Inaktivitäts-Zeitintervall (18a-b) auf die Empfangseinheit (12a-b) zugegriffen wird, und wobei das Inaktivitäts-Zeitintervall maximal 7 ms beträgt.

## Claims

1. Hob device (10a-b) comprising a receiving unit (12a-b) which is provided for receiving at least one item of information, and a control unit (14a-b) which is provided, in at least one operating state, to control at least one power supply unit (16a-b) and to access the receiving unit (12a-b), wherein the control unit (14a-b) is provided, in the operating state, to deactivate the power supply unit (16a-b) for an inactivity time interval (18a-b) and, during the inactivity time interval (18a-b), to access the receiving unit (12a-b), **characterised in that** the inactivity time interval (18a-b) is not more than 7 ms.

2. Hob device according to claim 1, **characterised in that** the receiving unit (12a-b) comprises a detection unit (20a-b) and is provided, in the operating state, to detect at least one characteristic variable by means of the detection unit (20a-b) during the inactivity time interval (18a-b).

3. Hob device according to claim 2, **characterised in that** the receiving unit (12a-b) is provided, in the operating state, to detect, by means of the detection unit (20a-b) during the inactivity time interval (18a-b), at least one temperature characteristic variable of a cooking container put in place.

4. Hob device according to claim 2 or 3, **characterised in that** the receiving unit (12a-b) is provided, in the operating state, to detect a cooking container put in place, by means of the detection unit (20a-b) during the inactivity time interval (18a-b).

5. Hob device according to one of the preceding claims, **characterised in that** the receiving unit (12a-b) comprises a communication unit (22a-b) and is provided, in the operating state, to participate by means of the communication unit (22a-b) in at least one communication during the inactivity time interval (18a-b).

6. Hob device according to one of the preceding claims, **characterised in that** the control unit (14a-b) is provided, in the operating state, during a first time interval (24a-b) after which the inactivity time interval (18a-b) directly follows chronologically, to operate the power supply unit (16a-b) at a switching frequency which continuously changes in value.

7. Hob device according to one of the preceding claims, **characterised in that** the control unit (14a-b) is provided, in the operating state, during a second time interval (26a-b) which directly follows chronologically after the inactivity time interval (18a-b), to operate the power supply unit (16a-b) at a switching frequency which continuously changes in value.

8. Hob device according to one of the preceding claims, **characterised in that** the control unit (14a) is provided, in the operating state, to arrange the inactivity time interval (18a) at least substantially symmetrically about a zero crossing (28a) of a supply voltage.

9. Hob device according to one of claims 1 to 7, **characterised in that** the control unit (14b) is provided, in the operating state, to arrange the inactivity time interval (18b) at least substantially asymmetrically about a zero crossing (28b) of a supply voltage.

10. Hob (30a), in particular an induction hob comprising at least one hob device (10a-b) according to one of the preceding claims.

11. Method for operating a hob device (10a-b) according to one of claims 1 to 9, having a receiving unit (12a-b) which is provided for receiving at least one item of information, wherein in at least one operating state, at least one power supply unit (16a-b) is controlled and the receiving unit (12a-b) is accessed, wherein, in the operating state, the power supply unit (16a-b) is deactivated for an inactivity time interval (18a-b) and during the inactivity time interval (18a-b), the receiving unit (12a-b) is accessed, and wherein the inactivity time interval (18a-b) is not more than 7 ms.

## Revendications

1. Dispositif de champ de cuisson (10a-b) avec une unité de réception (12a-b), prévue pour la réception d'au moins une information, et avec une unité de commande (14a-b), prévue afin de commander, dans au moins un état de fonctionnement au moins une unité d'alimentation (16a-b) et d'accéder à l'unité de réception (12a-b), dans lequel l'unité de commande (14a-b) est prévue afin de désactiver, dans l'état de fonctionnement, l'unité d'alimentation (16a-b) durant un intervalle de temps d'inactivité (18a-b) et d'accéder durant l'intervalle de temps d'inactivité (18a-b) à l'unité de réception (12a-b), **caractérisé en ce que** l'intervalle de temps d'inactivité (18a-b) atteint au maximum 7 ms.

2. Dispositif de champ de cuisson selon la revendication 1, **caractérisé en ce que** l'unité de réception (12a-b) présente une unité de détection (20a-b) et est prévue afin de détecter, dans l'état de fonctionnement, durant l'intervalle de temps d'inactivité (18a-b), au moyen de l'unité de détection (20a-b), au moins une grandeur caractéristique.

3. Dispositif de champ de cuisson selon la revendication 2, **caractérisé en ce que** l'unité de réception (12a-b) est prévue afin de détecter, dans l'état de fonctionnement, durant l'intervalle de temps d'inactivité (18a-b), au moyen de l'unité de détection (20a-b), au moins une grandeur caractéristique de température d'un élément de batterie de cuisine utilisé.

4. Dispositif de champ de cuisson selon la revendication 2 ou 3, **caractérisé en ce que** l'unité de réception (12a-b) est prévue afin de détecter, dans l'état de fonctionnement, durant l'intervalle de temps d'inactivité (18a-b), au moyen de l'unité de détection (20a-b), l'élément de batterie de cuisine utilisé.

5. Dispositif de champ de cuisson selon l'une des revendications précédentes, **caractérisé en ce que** l'unité de réception (12a-b) présente une unité de communication (22a-b) et est prévue afin de participer, dans l'état de fonctionnement, durant l'intervalle de temps d'inactivité (18a-b), au moyen de l'unité de communication (22a-b), à au moins une communication.

6. Dispositif de champ de cuisson selon l'une des revendications précédentes, **caractérisé en ce que** l'unité de commande (14a-b) est prévue afin d'exploiter, dans l'état de fonctionnement, durant un premier intervalle de temps (24a-b), que l'intervalle de temps d'inactivité (18a-b) suit immédiatement, l'unité d'alimentation (16a-b) selon une fréquence de commutation dont la valeur varie en permanence.

7. Dispositif de champ de cuisson selon l'une des revendications précédentes, **caractérisé en ce que** l'unité de commande (14a-b) est prévue afin d'exploiter, dans l'état de fonctionnement, durant un deuxième intervalle de temps (26a-b), suivant immédiatement l'intervalle de temps d'inactivité (18a-b), l'unité d'alimentation (16a-b) selon une fréquence de commutation dont la valeur varie en permanence.

8. Dispositif de champ de cuisson selon l'une des revendications précédentes, **caractérisé en ce que** l'unité de commande (14a) est prévue afin de disposer, dans l'état de fonctionnement, l'intervalle de temps d'inactivité (18a) au moins essentiellement de façon symétrique autour d'un passage par zéro (28a) d'une tension d'alimentation.

9. Dispositif de champ de cuisson selon l'une des revendications 1 à 7, **caractérisé en ce que** l'unité de commande (14b) est prévue afin de disposer, dans l'état de fonctionnement, l'intervalle de temps d'inactivité (18b) au moins essentiellement de façon asymétrique autour d'un passage par zéro (28b) d'une tension d'alimentation.

10. Champ de cuisson (30a), en particulier champ de cuisson à induction, avec au moins un dispositif de champ de cuisson (10a-b) selon l'une des revendications précédentes.

11. Procédé de fonctionnement d'un dispositif de champ de cuisson (10a-b) selon l'une des revendications 1 à 9, avec une unité de réception (12a-b), prévue pour la réception d'au moins une information, dans lequel dans au moins un état de fonctionnement au moins une unité d'alimentation (16a-b) est actionnée et un accès à l'unité de réception (12a-b) s'opère, dans lequel dans l'état de fonctionnement l'unité d'alimentation (16a-b) est désactivée durant un intervalle de temps d'inactivité (18a-b) et un accès à l'unité de réception (12a-b) s'opère durant l'intervalle de temps d'inactivité (18a-b), et dans lequel l'intervalle de temps d'inactivité atteint au maximum 7 ms.
